# EUROPÄISCHE PATENTSCHRIFT

(11) **EP 1 993 180 B1**
(45) Veröffentlichungstag und Bekanntmachung des Hinweises auf die Patenterteilung: **26.09.2018**
(21) Anmeldenummer: 08008321.5
(22) Anmeldetag: 02.05.2008
(51) Int. Cl.: H02G 3/12, H01H 9/00

(54) **Sensoreinheit zur Montage in einer Installationsdose**
Sensor unit for mounting in an installation box
Detecteur pour montage dans un boîtier d'installation

(30) Priorität: 12.05.2007 DE 102007022340
(43) Veröffentlichungstag der Anmeldung: 19.11.2008
(73) Patentinhaber: ABB AG, 68309 Mannheim (DE)
(72) Erfinder: Clever, Gerhard, Dipl.-Ing., 58553 Halver (DE); Diehl, Sven, Dipl.-Ing., 57078 Siegen (DE); Goldyn, Dirk, Dipl.-Ing., 58454 Witten (DE); Grotensohn, Michael, Dipl.-Ing., 58454 Witten (DE); Lange, Manfred, Dipl.-Ing., 44229 Dortmund (DE); Quittmann, Olaf, Dipl.-Ing., 59846 Sundern (DE); Schneider, Martin, 42499 Hückeswagen (DE); Zierach, Falk, Dipl.-Ing., 58513 Lüdenscheid (DE)

(56) Entgegenhaltungen:
- EP-A1- 1 135 013
- EP-A2- 0 949 791
- DE-A1- 10 307 352
- DE-U1-202004 005 624

## Beschreibung

Die Erfindung bezieht sich auf eine Sensoreinheit gemäß dem Oberbegriff des Anspruchs 1. Es kann sich dabei um eine Sensoreinheit eines Installationsbusses der Gebäudesystemtechnik oder um eine Sensoreinheit zum direkten Steuern/Schalten einer Last (konventionelle Installationstechnik) handeln.

Aus der DE 195 41 499 A1 ist ein Bedienelement für Stell- und Steuervorgänge in der Gebäudesystemtechnik bekannt, das Stelleingaben mittels Anwendungsmodulen und einem Busankoppler mit ladbarer Software einem Bussystem zuführt, wobei das Bussystem über weitere Busankoppler und Anwenderschnittstellen Aktionen an gewünschten Stellen ermöglicht. Das Bedienelement umfasst zumindest zwei Module verschiedener Funktionen (z. B. Bewegungsmelder und Schalter), wobei das Bedienelement auf den Busankoppler aufsteckbar ist und der Einbauraum nur einer Unterputzdose benötigt wird.

Aus der DE 10 2004 011 643 A1 ist ein Eingabegerät eines Installationsbussystems mit einem Eingabeelement mit mindestens einem Tastsensor bekannt, welches mit einem Grundgerät verbunden ist, wobei das Grundgerät unter anderem eine Busankopplung enthält und in einer Unterputzdose montierbar ist. Das Eingabeelement ist über Schwenkhebel gelenkig mit dem Grundgerät verbunden, so dass das Eingabeelement wahlweise in eine geschlossene Position und in eine offene Position mit einem vorgegebenen Schwenkwinkel gegenüber der vertikalen Stellung positionierbar ist. Vorzugsweise ist eine Steckdose im unteren Teilabschnitt des Grundgerätes installiert und bei geschwenkter Position des Eingabeelementes frei zugänglich.

Aus der DE 198 42 790 A1 ist eine Tastsensoreinheit eines Installationsbusses der Gebäudesystemtechnik bekannt, wobei die Tastsensoreinheit über eine Anwendungsschnittstelle mit einem Busankoppler verbunden ist, der seinerseits an eine Busleitung angeschlossen ist. Die Tastsensoreinheit kann durch Betätigen von Tasten bedient werden und zeigt über Leuchtdioden den Schaltzustand der entsprechenden Aktoren an.

Aus der DE 299 04 174 U1 ist ein Installationsschalter für die Gebäudeinstallation bekannt, mit einem in eine Installationsdose einsetzbaren Installationsgehäuse (inklusive Busankoppler mit Mikroprozessor) mit Tragplatte, einem dem Installationsgehäuse abnehmbar vorgesetzten Sockel und einer an dem Sockel befestigten Tastplatte, die mindestens ein durch Druck betätigbares Schaltorgan enthält, wobei die Tastplatte aus einer durchsichtigen Scheibe besteht. Dabei besteht die Möglichkeit, die funktionell wirksame Tastfläche weit über die Fläche der Installationsdose hinaus zu vergrößern, ohne dass eine massiv und großflächig wirkende Schalttafel entsteht.

Die EP 1 135 035 zeigt ein Installationsgerät mit einem Basisgerät, das in einer Installationsdose montiert werden kann mit einem Grundträger mit mindestens einem Feld zur Aufnahme eines Bedien- oder Funktionselementes und mit mehreren elektrisch leitenden Schienen für Kommunikation und Energieversorgung welche über elektrische Kontakte mit dem Bedienelement verbunden sind.

Der Erfindung liegt die Aufgabe zugrunde, eine Sensoreinheit anzugeben, welche beliebig viele Bedien- oder Funktionselemente aufweisen kann.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass für die einzelnen Bedien- oder Funktionselemente keine festgelegten Positionen innerhalb des Grundträgers bestimmt werden müssen. Dabei kann sich die Sensoreinheit in vertikaler oder horizontaler Konfiguration erstrecken. Es sind nachträglich jederzeit Positionsänderungen oder auch Erweiterungen hinsichtlich der Bedien- oder Funktionselemente möglich. Einzelne Bedien- oder Funktionselemente können in einfacher Art und Weise gelöst und (z. B. nachträglich) ausgetauscht werden. Dabei ist es nicht erforderlich, Leitungslängen für die externe/interne Verdrahtung zu verändern. Es dient ein einheitlieher, mehrfach in Feldern untergegliederter Grundträger zur Integration verschiedenartiger Bedien- oder Funktionselemente, wie z. B. Einfach-Taster, Mehrfach-Taster, Drehelement, Dreh-Drückelement, Joystick, Display, Touchscreen, Lautsprecher, Mikrofon. Die Ausbildung des Grundträgers (Anzahl der Glieder respektive der Felder) richtet sich lediglich nach der Anzahl der zu integrierenden Bedien- oder Funktionselemente. Dabei ist unabhängig von der Anzahl der Bedien- oder Funktionselemente lediglich ein Basisgerät, vorzugsweise ein Unterputz-Einsatz (geeignet für die Montage in einer handelsüblichen Standard-Unterputzdose) respektive ein Steuer/Schaltglied oder ein Busankoppler erforderlich. Die Positionierung des Grundträgers hinsichtlich des Unterputz-Einsatzes ist wahlfrei, entweder mittig oder außermittig nach oben oder unten oder rechts oder links versetzt.

Der Grundgedanke des Systems ist es, dass mit Hilfe eines Trägerrahmens mehrere Bedienelemente auf mindestens einen Unterputz(UP)-Einsatz wirken können. Mit diesem UP-Einsatz können entweder Lasten direkt (konventionelle Installationstechnik) oder über einen Bus (Gebäudesystemtechnik) gesteuert werden.

Zum Beispiel kann in der konventionellen Installationstechnik ein Dimmer mit mehreren Bedienelementen ausgestattet werden, um damit verschiedene Lichtszenen zu steuern. In der Gebäudesystemtechnik spart man sich den Einsatz weiterer Busankoppler, wenn an einem Ort mehrere Sensoren platziert werden sollen.

Das Trägerrahmenkonzept bietet auch die Möglichkeit, zusätzlich mehrere UP-Einsätze zu kombinieren.

In der konventionellen Installationstechnik ist damit z. B. die Kombination von verschiedenen UP-Geräten - z. B. Dimmer, Schalter oder Jalousieschalter - realisierbar. Damit kann man über die Bedienelemente komplexe Licht/Jalousieszenen einstellen oder abrufen.

In der Gebäudesystemtechnik können damit neben dem UP-Busankoppler auch zusätzlich UP-Aktoren über den Trägerrahmen angesteuert werden, welche direkt Lasten schalten oder dimmen können.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: alle wesentlichen Baukomponenten einer Sensoreinheit in Explosionsdarstellung,
- Fig. 2: eine Detailansicht eines Grundträgers mit einem VerbindungsFunktionselement,
- Fig. 3: eine perspektivische Sicht auf die Unterseite eines VerbindungsFunktionselements,
- Fig. 4: eine perspektivische Sicht auf die Unterseiten von Leiterplatten,
- Fig. 5: eine perspektivische Sicht auf die Unterseite von Federkontakten,
- Fig. 6: eine perspektivische Sicht auf eine zusammengebaute Sensoreinheit,
- Fig. 7: eine Sicht auf die Frontseite einer zusammengebauten Sensoreinheit,
- Fig. 8: eine Seitenansicht einer zusammengebauten Sensoreinheit,
- Fig. 9: eine Detailansicht zur Montage einer endseitigen Abschlussdeckleiste,
- Fig. 10: eine perspektivische Sicht auf eine zusammengebaute Sensoreinheit in alternativer Ausführungsform,
- Fig. 11: eine alternative Ausführungsform eines Verbindungs-Funktionselements.

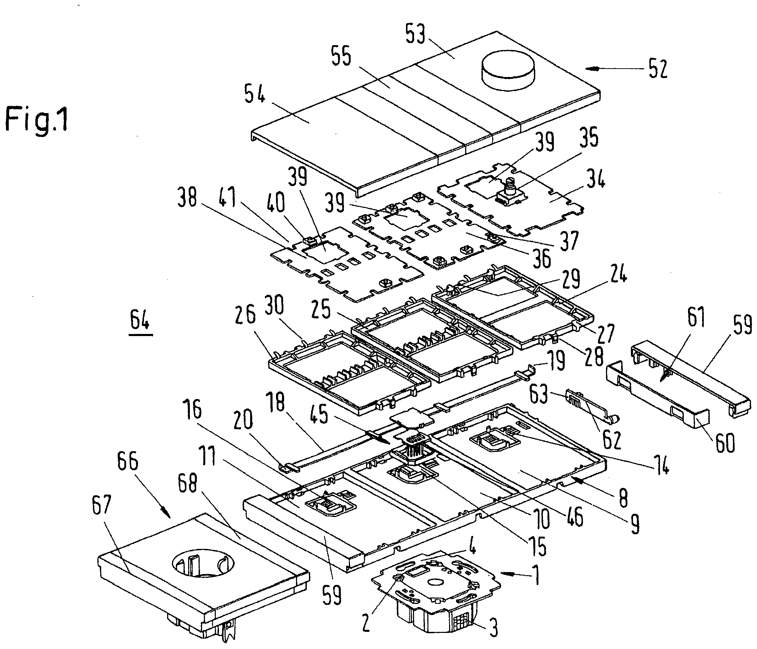

In Fig. 1 sind alle wesentlichen Baukomponenten einer Sensoreinheit in Explosionsdarstellung dargestellt. Es kann sich dabei z. B. um die Sensoreinheit eines Installationsbusses der Gebäudesystemtechnik handeln. Die Sensoreinheit 64 setzt sich aus folgenden Baueinheiten zusammen:
- mindestens einem Basisgerät 1 (vorzugsweise Unterputz-Einsatz), z. B. Busankoppler für einen Installationsbus der Gebäudesystemtechnik oder Steuer-/Schaltglied zur Ansteuerung oder zum Schalten einer Last, z. B. Dimmer, Schalter, Jalousieschalter in der konventionellen Installationstechnik,
- einem Grundträger 8,
- mehreren Tragrahmen, hier z. B. drei Tragrahmen 24, 25, 26,
- mehreren Leiterplatten, hier z. B. drei Leiterplatten 34, 36, 38,
- einem Verbindungs-Funktionselement 45,
- mehreren Bedien- oder Funktionselementen 52 und
- zwei endseitigen Abschlussleisten 59.

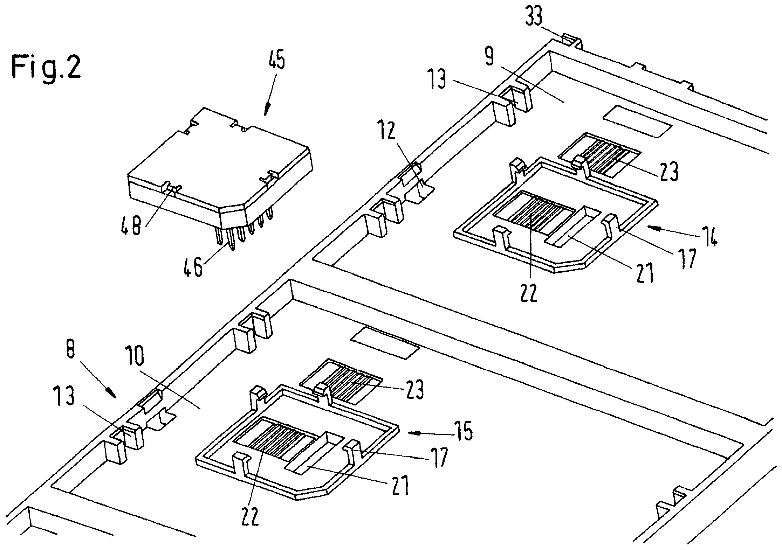

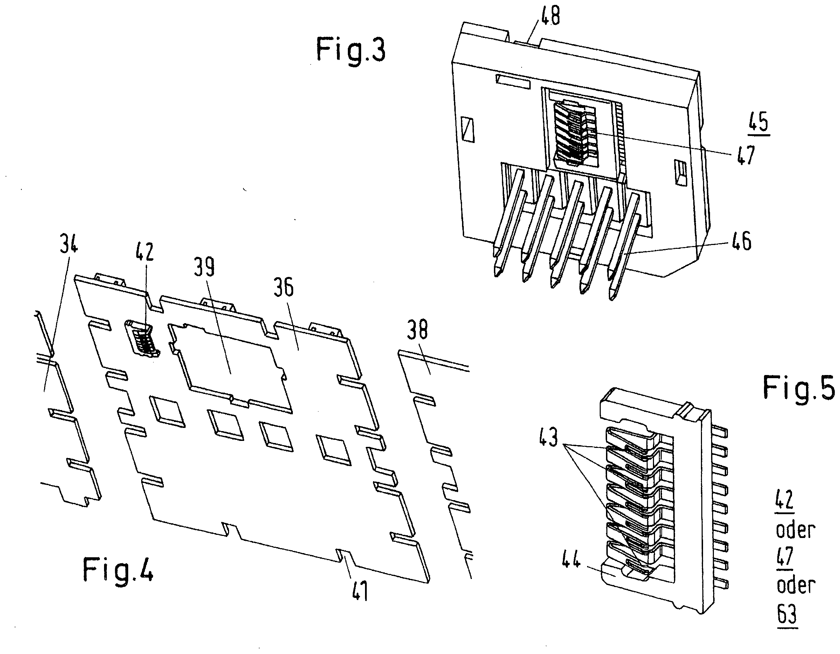

Das Basisgerät 1 ist vorzugsweise als Unterputz-Einsatz ausgeführt und weist deshalb einen Tragring 2 auf (selbstverständlich kann dieser Tragring bei Ausbildung des Basisgeräts 1 in Form eines Aufputzgerätes entfallen). Ein seitlicher Anschlussblock 3 dient dem Anschluss von externer Verdrahtung (für die Energieversorgung und für die Kommunikation). Eine von der Oberseite aus zugängliche Buchsenleiste 4 dient zur Kontaktierung mit Stiftkontakten 46 (siehe hierzu auch Fig. 2 und 3) eines Verbindungs-Funktionselements 45.

Die konkrete Ausbildung des Grundträgers 8 ist abhängig von der Anzahl der einzusetzenden Bedien- oder Funktionselemente 52, d. h. es sind unterschiedliche Grundträger 8 für • eine Sensoreinheit 64 mit lediglich einem Bedien- oder Funktionselement 52,
- für eine Sensoreinheit 64 mit zwei Bedien- oder Funktionselementen 52,
- für eine Sensoreinheit 64 mit drei Bedien- oder Funktionselementen 52 usw. verfügbar. Im gezeigten Beispiel ist ein zur Aufnahme von drei Bedien- oder Funktionselementen 52 bestimmter Grundträger 8 gezeigt. Dementsprechend weist der Grundträger 8 drei Felder 9, 10, 11 auf. Jedes Feld 9 bzw. 10 bzw. 11 besitzt eine Aufnahmestelle 14 bzw. 15 bzw. 16 für ein Verbindungs-Funktionselement 45, d. h. das Verbindungs-Funktionselement 45 kann wahlweise in eine dieser drei Aufnahmestellen 14 oder 15 oder 16 eingreifen. Je nach gewähltem Eingreifpunkt des Verbindungs-Funktionselements 45 ergibt sich wahlweise eine mittige oder eine zu einem der beiden Enden hin versetzte Anschlusskonfiguration zwischen Basisgerät 1 und Grundträger 8.

Im Grundträger 8 sind mehrere elektrisch leitende Schienen 18 integriert, welche
- teilweise für die elektrische Energieversorgung (Versorgungsschienen),
- teilweise für die Kommunikation untereinander und mit dem Basisgerät 1 (Kommunikationsschienen) und
- teilweise für die Codierung (Codierungsschienen)
dienen. Die elektrisch leitenden Schienen 18 weisen an ihren beiden Enden Abwinkelungen 19, 20 auf, welche zur elektrischen Kontaktierung mindestens eines zusätzlichen, in mindestens einer endseitigen Aufnahmekammer 61 integrierbaren Funktionselements, wie z. B.
- eines Infrarot-Empfängers und/oder
- eines Infrarot-Senders und/oder
- eines Helligkeitssensors und/oder
- eines Näherungssensors
dienen. Dieses mindestens eine Funktionselement ist auf einem endseitigen Bauelementträger 62 montiert, welcher Federkontakte 63 aufweist und auf diese Weise mit einer endseitigen Abwinkelung 19, 20 kontaktierbar ist.

Eine endseitige Aufnahmekammer 61 wird mittels der vorstehend erwähnten endseitigen Abschlussdeckleiste 59 nach außen hin abgedeckt und mittels eines endseitigen Abschlusselements 60 gegenüber einem endseitigen Feld des Grundträgers 8 abgetrennt.

In jedes Feld des Grundträgers 8 wird ein Tragrahmen eingebracht, wobei die spezielle Ausbildung eines Tragrahmens entsprechend des für das einzelne Feld vorgesehenen Bedien- oder Funktionselements 52 unterschiedlich ist. Im Ausführungsbeispiel
- wird ein Tragrahmen 24 für ein Dreh-Drückelement in das Feld 9,
- wird ein Tragrahmen 25 für einen Einfach- oder Mehrfach-Taster in das Feld 10,
- wird ein Tragrahmen 26 für einen Einfach- oder Mehrfachtaster in das Feld 11 eingelegt.

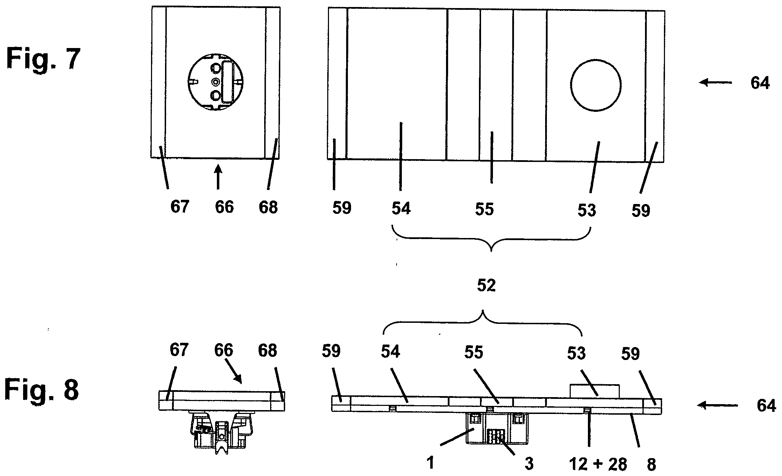

Zur exakten Positionierung eines Tragrahmens 24, 25, 26 innerhalb eines Feldes 9, 10, 11 greifen am Tragrahmen angeformte Führungsrippen 27 in korrespondierende Führungsnuten 13 (siehe Fig. 2) des Grundträgers 8 ein. Zur Befestigung eines Tragrahmens 24, 25, 26 am Grundträger 8 greifen an jedem Tragrahmen angeformte Rastnasen 28 in korrespondierende Rastnuten 12 (siehe hierzu Fig. 2 und 8) des Grundträgers 8 ein.

In jeden Tragrahmen 24, 25, 26 wird eine Leiterplatte eingebracht, wobei die spezielle Ausbildung der Leiterplatte entsprechend des für das einzelne Feld 9, 10, 11 vorgesehenen Bedien- oder Funktionselements 52 unterschiedlich ist. Im Ausführungsbeispiel
- wird eine mit einem Drehpotentiometer/Druckschalter-Element 35 versehene Leiterplatte 34 für ein Dreh-Drückelement in den Tragrahmen 24,
- wird eine mit mehreren Mikrotastern 37 versehene Leiterplatte 36 für ein Mehrfach-Tastelement in den Tragrahmen 25,
- wird eine mit zwei Mikrotastern 40 versehene Leiterplatte 38 für ein Einfach-Tastelement in den Tragrahmen 26 eingelegt.

Jede Leiterplatte 34, 36, 38 weist mindestens einen Durchbruch 39 zur Durchführung eines Verbindungs-Funktionselements 45 auf. Zur exakten Positionierung einer Leiterplatte 34, 36, 38 innerhalb eines Tragrahmens 24 - 26 greifen am Tragrahmen angeformte Arretierrippen 29 in randseitig einer Leiterplatte vorgesehene Arretiernuten 41.

Jeder Konfiguration "Feld des Grundträgers + Tragrahmen + Leiterplatte" ist ein gewünschtes Bedien- oder Funktionselement 52 zugeordnet. Als Bedien- oder Funktionselemente 52 der Sensoreinheit 64 können z. B. vorgesehen sein:
- Einfach-Taster,
- Mehrfach-Taster (d. h. insbesondere Zweifach-Taster oder Dreifach-Taster),
- Drehelement,
- Dreh-Drückelement,
- Joystick,
- Display (Anzeigeelement),
- Touchscreen (Touch-Display, Touch-Panel),
- Bewegungsmelder,
- Kommunikationselement wie Lautsprecher oder Mikrofon.

Im gezeigten Ausführungsbeispiel
- ist ein Dreh-Drückelement 53 mit Drehknopf im Feld 9 des Grundträgers 8 montiert,
- ist ein Dreifach-Taster 55 mit drei Wippen im Feld 10 des Grundträgers 8 montiert,
- ist ein Einfach-Taster 54 mit einer Wippe im Feld 11 des Grundträgers 8 montiert.

Für die Rückstellung in eine neutrale Position der Taster 54 oder 55 sind an den Tragrahmen mehrere Federelemente 30 angeformt, welche auf korrespondierenden Flächen eines Bedienelementes abgleiten können.

An die Sensoreinheit 64 lässt sich eine in gleichem Design ausgebildete Steckdose 66 anfügen, welche mit gleichartigen endseitigen Abschlussdeckleisten 67, 68 versehen ist.

In Fig. 2 ist eine Detailansicht eines Grundträgers 8 mit einem Verbindungs-Funktionselement dargestellt. Es sind die Felder 9 bzw. 10 mit ihren Aufnahmestellen 14 bzw. 15 zur Montage des Verbindungs-Funktionselementes 45 zu erkennen. Innerhalb der Aufnahmestellen 14 - 16 vorgesehene Durchbrüche 21 erlauben einen Durchgriff der Stiftkontakte 46 des Verbindungs-Funktionselementes 45. Sobald das Verbindungs-Funktionselement 45 auf die gewünschte Aufnahmestelle 14 - 16 des Grundträgers 8 aufgesteckt ist, ergibt sich eine mechanische Verrastung zwischen Verbindungs-Funktionselement 45 und Grundträger 8, indem randseitig der Aufnahmestelle 14 - 16 angeformte Rastnasen 17 über Nuten 48 des Verbindungs-Funktionselements 45 greifen.

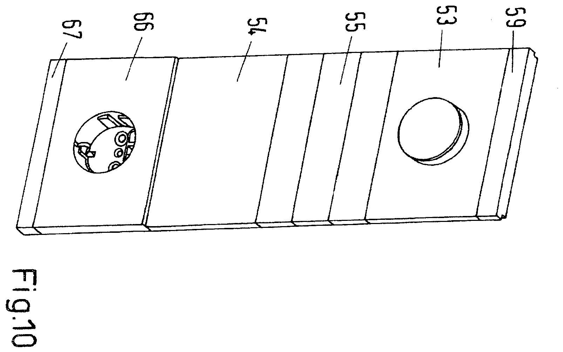

Innerhalb jeder Aufnahmestelle 14 - 16 sind Kontaktierungen 22 der Schienen 18 vorgesehen. Zusätzlich sind neben einer jeden Aufnahmestelle 14 - 16 Kontaktierungen 23 der Schienen 18 vorgesehen. Fig. 2 zeigt ferner die vorstehend erwähnten Führungsnuten 13 sowie Rastnuten 12. Am Grundträger 8 angeformte Führungselemente 33 dienen zur Montage einer endseitigen Abschlussdeckleiste 59. Details hierzu sind in Fig. 10 gezeigt.

In Fig. 3 ist eine perspektivische Sicht auf die Unterseite eines Verbindungs-Funktionselements 45 dargestellt. Außer den bereits erwähnten Stiftkontakten 46 sind Federkontakte 47 für die Kontaktierung der Schienen 18 an der Unterseite vorgesehen. Dabei ist über eine interne Verschaltung innerhalb des Verbindungs-Funktionselements 45 jeder Stiftkontakt 46 mit einem bestimmten Federkontakt 47 elektrisch verbunden. An der Oberseite des Verbindungs-Funktionselements 45 sind die vorstehend erwähnten Nuten 48 eingeformt.

In Fig. 4 ist eine perspektivische Sicht auf die Unterseiten der Leiterplatten 34, 36, 38 dargestellt. Es sind der Durchbruch 39 und die randseitigen Arretiernuten 41 zu erkennen. Neben dem Durchbruch 39 einer jeden Leiterplatte 34, 36, 38 sind Federkontakte 42 für die Kontaktierung der elektrischen Schienen 18 vorgesehen.

Im Einzelnen ergibt sich folgende elektrische Verschaltung (siehe hierzu die Fig. 1 + 2 + 3):
- Die Stiftkontakte 46 des Verbindungs-Funktionselementes 45 greifen durch den Durchbruch 21 elektrisch kontaktierend in die Buchsenleiste 4 (siehe Fig. 1) des Basisgeräts 1.
- Die Federkontakte 47 des Verbindungs-Funktionselements 45 greifen auf die Kontaktierungen 22 der Schienen 18, wodurch die elektrischen Verbindungen zwischen Buchsenleiste 4 und Schienen 18 hergestellt werden.
- Die Federkontakte 42 der Leiterplatten 34, 36, 38 greifen auf die Kontaktierungen 23 der Schienen 18, wodurch die elektrischen Verbindungen zwischen den Schienen 18 und den elektrischen/elektronischen Baukomponenten der Leiterplatten 34, 36, 38 - wie z. B. Drehpotentiometer/Druckschalter-Element, Mikrotaster, Bildschirm, Bewegungsmelder-Sensorik, Lautsprecher, Mikrofon - hergestellt werden.
- Eventuell in den endseitigen Aufnahmekammern 61 vorgesehene zusätzliche Funktionselemente, wie z. B. Infrarot-Empfänger, Infrarot-Sender, Helligkeitssensor, Näherungssensor erhalten über die Federkontakte 63 elektrischen Kontakt mit den endseitigen Abwinkelungen 19, 20 der Schienen 18.

In Fig. 5 ist eine perspektivische Sicht auf die Unterseite der Federkontakte 42 oder 47 oder 63 dargestellt. In einem Isolierträger 44 sind eine Vielzahl von separaten Federelementen 43 befestigt, wobei die Anzahl der Federelemente 43 der Anzahl der vorgesehenen Schienen 18 entspricht.

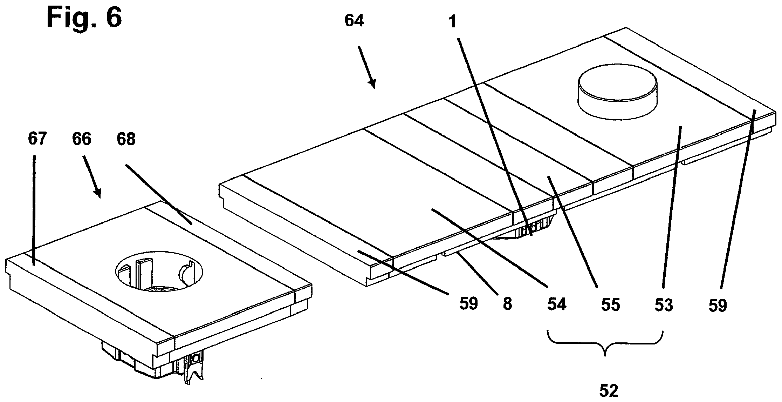

In Fig. 6 ist eine perspektivische Sicht auf eine zusammengebaute Sensoreinheit 64 dargestellt. Das Dreh-Drückelement 53, der Einfach-Taster 54, der Dreifach-Taster 55 und die beiden endseitigen Abschlussdeckleisten 59 sind derart am Grundträger 8 befestigt, dass sich ein äußerst flaches Installationsgerät ergibt. Lediglich das Basisgerät 1 erfordert für die Montage eine handelsübliche Unterputzdose, während die Bedienelemente 52 flach auf der Wand angeordnet sind. Wie bereits vorstehend erwähnt, kann das Basisgerät 1 wahlweise direkt unter dem Dreh-Drückelement 53 oder unter dem Einfach-Taster 54 oder direkt unter dem Dreifach-Taster 55 angeordnet sein (letzteres ist gezeigt). Auf diese Weise ergibt sich für den Installateur die Möglichkeit, die Sensoreinheit 64 entsprechend dem Wunsch des Endkunden in gewünschter Höhe und Weise in Form einer vertikalen (oder ggf. auch horizontalen) Anordnung an einer Wand zu befestigen.

Zur Ergänzung kann eine Steckdose 66 in gleichem Design mit endseitigen Abschlussdeckleisten 67, 68 vorgesehen sein.

In Fig. 7 ist eine Sicht auf eine zusammengebaute Sensoreinheit 64 dargestellt. Es sind wiederum die drei Bedienelemente 52, nämlich das Dreh-Drückelement 53, der Einfach-Taster 54 und der Dreifach-Taster 55 sowie die beiden endseitigen Abschlussdeckleisten 59 zu erkennen. Zur Ergänzung kann eine Steckdose 66 in gleichem Design mit endseitigen Abschlussdeckleisten 67, 68 vorgesehen sein.

In Fig. 8 ist eine Seitenansicht einer zusammengebauten Sensoreinheit 64 dargestellt. Es sind zu erkennen:
- die drei Bedienelemente 52, nämlich das Dreh-Drückelement 53, der Einfach-Taster 54 und der Dreifach-Taster 55,
- die beiden endseitigen Abschlussdeckleisten 59,
- das Basisgerät 1 mit Anschlussblock 3 für die externe Verdrahtung,
- der Grundträger 8 mit Rastverbindung "Rastnuten 12 + Rastnasen 28" für die Montage der Tragrahmen 24 - 26.

Zur Ergänzung kann wiederum eine Steckdose 66 in gleichem Design mit endseitigen Abschlussdeckleisten 67, 68 vorgesehen sein.

In Fig. 9 ist eine Detailansicht zur Montage einer endseitigen Abschlussdeckleiste am Beispiel eines endseitig angeordneten Dreh-Drückelements 53 dargestellt. Die endseitige Abschlussdeckleiste 59 weist Rasthaken 65 auf, welche im montierten Zustand in die Führungselemente 33 des Grundträgers 8 eingreifen. Wie vorstehend bereits erwähnt, kontaktieren die Federkontakte 63 des endseitigen Bauelementträgers 62 innerhalb der Aufnahmekammer 61 die endseitigen Abwinkelungen 19 (respektive 20) der elektrischen Schienen 18.

In der vorstehend erläuterten Art und Weise kann auch die direkte Montage einer Steckdose 66 am Grundträger 8 durch Eingriff von nicht gezeigten Rasthaken der Steckdose in die Führungselemente 33 erfolgen - siehe hierzu auch das nachstehende Ausführungsbeispiel gemäß Fig. 10.

In Fig. 10 ist eine perspektivische Sicht auf eine zusammengebaute Sensoreinheit in alternativer Ausführungsform dargestellt. Bei dieser alternativen Ausführungsform ist die Steckdose 66 in Form eines weiteren Moduls direkt an die Bedien- oder Funktionselemente - wie Dreh-Drückelement 53 mit Drehknopf, Dreifach-Taster 55 mit drei Wippen, Einfach-Taster 54 mit einer Wippe - angesetzt. Die mechanische Verbindung zwischen Steckdose 66 und Grundträger 8 erfolgt über die Führungselemente 33 des Grundträgers, in welche nicht gezeigte Rasthaken der Steckdose 66 eingreifen. Die Enden der gebildeten Einheit werden mittels einer Abschlussdeckleiste 59 und einer Abschlussdeckleiste 67 verschlossen. Bei dieser alternativen Ausführungsform entfallen eine der beiden Abschlussdeckleiste 59 sowie Abschlussdeckleiste 68.

Vorstehend ist bereits die in der Sensoreinheit 64 realisierbare Näherungsfunktion angedeutet:
- als Bedien- oder Funktionselement 52 ist ein Bewegungsmelder eingesetzt oder
- in einer Aufnahmekammer 61 sind Baukomponenten eines Bewegungsmelders angeordnet.

Vorteilhaft ist es bei einer solchen Ausbildungsform möglich, die Sensoreinheit 64 bei Annäherung einer Person in gewünschter Art und Weise anzusteuern, z. B. kann bei Annäherung einer Person ein als Funktionselement 52 eingesetztes Display aktiviert werden, um den aktuellen Funktionszustand der einzelnen Bedienelemente anzuzeigen.

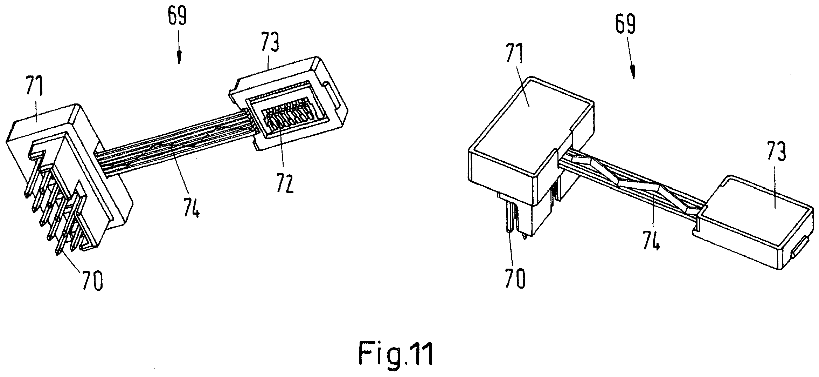

In Fig. 11 ist eine alternative Ausführungsform eines Verbindungs-Funktionselements dargestellt. Bei diesem Verbindungs-Funktionselement 69 sind Stiftkontakte 70 als Kontaktteil zum Basisgerät 1 bzw. Federkontakte 72 für die Kontaktierungen der Schienen 18 mit jeweils separaten Gehäusen 71 bzw. 73 vorgesehen, wobei Verbindungsleitungen 74 zur elektrischen Verbindung zwischen den Stiftkontakten 70 und den Federkontakten 72 vorgesehen sind. Mittels dieser Ausführungsform eines Verbindungs-Funktionselements können vorteilhaft installationsbedingte Toleranzen zwischen dem Unterputzteil und dem Bedienteil auf der Wand flexibel ausgeglichen werden. Selbstverständlich sind bei dieser Ausführungsform die Felder 9 - 11 dementsprechend abgewandelt, so dass Durchbruch 21 (für die Stiftkontakte 70) und Kontaktierungen 22 in einem definierten Abstand (entsprechend den Abmessungen der Verbindungsleitungen 74) angeordnet sind.

Bei allen vorstehend angeführten Ausführungsbeispielen kann das Verbindungs-Funktionselement selbst
- ein Codierungsmittel, z. B. in Form eines Widerstandes aufweisen, um dem Basisgerät Informationen bezüglich der speziellen Art der Sensoreinheit zur Verfügung zu stellen, wodurch die Art und Weise der Kommunikation (Protokoll) festzulegen ist,
- "Intelligenz" in Form eines Mikroprozessors mit nichtflüchtigem Speicher aufweisen, um derart z. b. die Funktion einer Sensoreinheit zu ermitteln / abzuspeichern.

### Bezugszeichenliste:

- 1: Basisgerät, vorzugsweise Unterputz-Einsatz
- 2: Tragring
- 3: Anschlussblock für externe Verdrahtung
- 4: Buchsenleiste
- 5: ---
- 6: ---
- 7: ---
- 8: Grundträger für die Aufnahme von einem oder mehreren Bedien- oder Funktionselement(en)
- 9: Feld für ein Bedien- oder Funktionselement
- 10: Feld
- 11: Feld
- 12: Rastnuten für die Verrastung mit einem Tragrahmen
- 13: Führungsnuten für einen Tragrahmen
- 14: Aufnahmestelle für ein Verbindungs-Funktionselement zur Kontaktierung mit dem Basisgerät
- 15: Aufnahmestelle
- 16: Aufnahmestelle
- 17: Rastnasen zur Arretierung eines Verbindungs-Funktionselementes 45
- 18: elektrische Schienen (Versorgungsschienen, Kommunikationsschienen, Codierungsschienen)
- 19: endseitige Abwinkelung
- 20: endseitige Abwinkelung
- 21: Durchbruch für Stiftkontakte des Verbindungs-Funktionselementes 45
- 22: Kontaktierungen der Schienen für die Federkontakte 47 des Verbindungs-Funktionselementes 45
- 23: Kontaktierungen der Schienen 18 für die Federkontakte 42 der Leiterplatten
- 24: Tragrahmen für ein Dreh-Drückelement
- 25: Tragrahmen für einen Einfach- oder Mehrfach-Taster
- 26: Tragrahmen für einen Einfach- oder Mehrfach-Taster
- 27: Führungsrippen für die Arretierung innerhalb eines Feldes
- 28: Rastnasen für die Montage am Grundträger
- 29: Arretierrippen für die Halterung einer Leiterplatte
- 30: Federelemente
- 31: ---
- 32: ---
- 33: Führungselement zur Aufnahme eines Rasthakens 65
- 34: Leiterplatte für ein Dreh-Drückelement
- 35: Drehpotentiometer/Druckschalter-Element
- 36: Leiterplatte für ein Mehrfach-Tastelement
- 37: Mikrotaster
- 38: Leiterplatte für ein Einfach-Tastelement
- 39: Durchbruch für das Verbindungs-Funktionselement 45
- 40: Mikrotaster
- 41: Arretiernuten
- 42: Federkontakte für die Kontaktierungen der Schienen 18
- 43: Federelemente
- 44: Isolierträger
- 45: Verbindungs-Funktionselement
- 46: Stiftkontakte
- 47: Federkontakte für die Kontaktierungen der Schienen 18
- 48: Nuten zur Aufnahme der Rastnasen 17
- 49: ---
- 50: ---
- 51: ---
- 52: Bedien- oder Funktionselemente
- 53: Dreh-Drückelement mit Drehknopf
- 54: Einfach-Taster mit einer Wippe
- 55: Dreifach-Taster mit drei Wippen
- 56: ---
- 57: ---
- 58: ---
- 59: endseitige Abschlussdeckleiste
- 60: endseitiges Abschlusselement
- 61: Aufnahmekammer für mindestens ein zusätzliches Funktionselement, wie Infrarot-Empfänger und/oder Infrarot-Sender und/oder Helligkeitssensor und/oder Näherungssensor
- 62: endseitiger Bauelementträger mit mindestens einem zusätzlichen Funktionselement
- 63: Federkontakte
- 64: Sensoreinheit
- 65: Rasthaken
- 66: Steckdose als Peripheriegerät
- 67: endseitige Abschlussdeckleiste
- 68: endseitige Abschlussdeckleiste
- 69: Verbindungs-Funktionselement
- 70: Stiftkontakte (Kontaktteil zum Basisgerät)
- 71: Gehäuse
- 72: Federkontakte für die Kontaktierungen der Schienen 18
- 73: Gehäuse
- 74: Verbindungsleitungen

## Patentansprüche

1. Sensoreinheit mit einem in einer handelsüblichen Standard-Unterputzdose montierbaren Basisgerät (1) und wenigstens einem Bedien- oder Funktionselement, welches mit mindestens einem Bedien- oder Funktionselement (52) verbindbar ist,
- wobei ein Grundträger (8) vorgesehen ist, der mindestens ein Feld (9, 10, 11) zur Aufnahme eines Bedien- oder Funktionselementes (52) aufweist, wobei im Grundträger (8) mehrere elektrisch leitende Schienen (18) integriert sind, welche teilweise für die elektrische Energieversorgung und teilweise für die Kommunikation dienen,
- wobei die elektrisch leitenden Schienen (18) über elektrische Kontakte (23,42) mit dem mindestens eine Bedien- oder Funktionselement (52) verbunden sind,
**dadurch gekennzeichnet**
- **dass** ein Verbindungs-Funktionselement (45, 69) einerseits über elektrische Kontakte (4, 46, 70) mit dem mindestens einen Basisgerät (1) und andererseits über weitere elektrische Kontakte (22, 47, 72) mit den elektrisch leitenden Schienen (18) verbunden ist.

2. Sensoreinheit nach Anspruch 1, **dadurch gekennzeichnet, dass** jedes Feld (9, 10, 11) eine Aufnahmestelle (14, 15, 16) für ein Verbindungs-Funktionselement (45, 69) aufweist.

3. Sensoreinheit nach Anspruch 2, **dadurch gekennzeichnet, dass** randseitig der Aufnahmestelle (14, 15, 16) angeformte Rastnasen (17) über Nuten (48) des Verbindungs-Funktionselementes (45, 69) greifen.

4. Sensoreinheit nach Anspruch 3, **dadurch gekennzeichnet, dass** ein innerhalb der Aufnahmestelle (14, 15, 16) vorgesehener Durchbruch einen Durchgriff von Stiftkontakten (46, 70) des Verbindungs-Funktionselementes (45, 69) in eine Buchsenleiste (4) des Basisgeräts (1) erlaubt.

5. Sensoreinheit nach einem der vorstehenden Ansprüche, **gekennzeichnet durch** ein starres Verbindungs-Funktionselement (45) mit räumlich fester Zuordnung der elektrischen Kontakte (46, 47) zueinander.

6. Sensoreinheit nach einem der Ansprüche 1 - 4, **gekennzeichnet durch** eine räumlich flexible Zuordnung der elektrischen Kontakte (70, 72) zueinander, indem beim Verbindungs-Funktionselement (69) die zur Kontaktierung mit dem Basisgerät (1) dienenden elektrischen Kontakte (70) und die zur Kontaktierung mit den elektrisch leitenden Schienen (1) dienenden weiteren elektrischen Kontakte (72) über Verbindungsleitungen (74) flexibel miteinander verbunden sind.

7. Sensoreinheit nach einem der vorstehenden Ansprüche, **dadurch gekennzeichnet, dass** in jedem Feld (9, 10, 11) des Grundträgers (8) ein Tragrahmen (24, 25, 26) eines Bedien- oder Funktionselements (52) eingebracht ist.

8. Sensoreinheit nach Anspruch 7, **dadurch gekennzeichnet, dass** am Tragrahmen (24, 25, 26) angeformte Führungsrippen (27) in korrespondierende Führungsnuten (13) des Grundträgers (8) eingreifen.

9. Sensoreinheit nach Anspruch 7 oder 8, **dadurch gekennzeichnet, dass** am Tragrahmen (24, 25, 26) angeformte Rastnasen (28) in korrespondierende Rastnuten (12) des Grundträgers (8) eingreifen.

10. Sensoreinheit nach einem der Ansprüche 6 - 9, **dadurch gekennzeichnet, dass** in einen Tragrahmen (24, 25, 26) eine Leiterplatte (34, 36, 38) des Bedien- oder Funktionselements (52) eingebracht ist.

11. Sensoreinheit nach Anspruch 10, **dadurch gekennzeichnet, dass** jede Leiterplatte (34, 36, 38) einen Durchbruch (39) zur Durchführung eines Verbindungs-Funktionselements (45, 69) aufweist.

12. Sensoreinheit nach Anspruch 10 oder 11, **dadurch gekennzeichnet, dass** am Tragrahmen (24, 25, 26) angeformte Arretierrippen (29) in randseitig einer Leiterplatte (34, 36, 38) vorgesehene Arretiernuten (41) eingreifen.

13. Sensoreinheit nach einem der Ansprüche 7 - 12, **dadurch gekennzeichnet, dass** am Tragrahmen (24, 25, 26) angeformte Federelemente (30) an korrespondierende Flächen eines Bedien- oder Funktionselementes (52) abgleiten.

14. Sensoreinheit nach einem der vorstehenden Ansprüche, **dadurch gekennzeichnet, dass** die elektrisch leitenden Schienen (18) mindestens eine endseitige Abwinkelung (19, 20) aufweisen, welche zur elektrischen Kontaktierung eines in einer endseitigen Aufnahmekammer (61) integrierten Funktionselementes dient.

15. Sensoreinheit nach Anspruch 14, **dadurch gekennzeichnet, dass** das Funktionselement auf einem endseitigen Bauelementträger (62) montiert ist, welcher Federkontakte (63) aufweist, um derart mit der endseitigen Abwinkelung (19, 20) zu kontaktieren.

16. Sensoreinheit nach einem der vorstehenden Ansprüche, **dadurch gekennzeichnet, dass** eine endseitige Aufnahmekammer (61) mittels einer endseitigen Abschlussdeckleiste (59) nach außen hin abgedeckt und mittels eines endseitigen Abschlusselements (60) gegenüber einem endseitigen Feld des Grundträgers (8) abgetrennt wird.

17. Sensoreinheit nach Anspruch 16 **dadurch gekennzeichnet, dass** am Grundträger (8) angeformte Führungselemente (33) zur Montage einer endseitigen Abschlussdeckleiste (59) dienen.

18. Sensoreinheit nach Anspruch 17, **dadurch gekennzeichnet, dass** eine endseitige Abschlussdeckleiste (59) Rasthaken (65) aufweist, welche im montierten Zustand in die Führungselemente (33) eingreifen.

19. Sensoreinheit nach einem der vorstehenden Ansprüche, **dadurch gekennzeichnet, dass** das Verbindungs-Funktionselement (45, 69) ein Codierungsmittel, z. B. in Form eines Widerstandes aufweisen, um dem Basisgerät Informationen bezüglich der speziellen Art der Sensoreinheit zur Verfügung zu stellen.

20. Sensoreinheit nach einem der vorstehenden Ansprüche, **dadurch gekennzeichnet, dass** das Verbindungs-Funktionselement (45, 69) einen Mikroprozessors mit nichtflüchtigem Speicher aufweist, um derart die Funktion einer Sensoreinheit zu ermitteln und/oder abzuspeichern.

## Claims

1. Sensor unit having a base device (1), which can be mounted in a commercially available standard flushmounted socket, and at least one operator control or functional element, which can be connected to at least one operator control or functional element (52),
- wherein a main support (8) is provided, which main support has at least one field (9, 10, 11) for receiving an operator control or functional element (52), wherein a plurality of electrically conductive rails (18) are integrated in the main support (8), which rails serve partly for the supply of electrical energy and partly for communication,
- wherein the electrically conductive rails (18) are connected to the at least one operator control or functional element (52) by means of electrical contacts (23, 42),
**characterized**
- **in that** a functional connection element (45, 69) is connected on one side to the at least one base device (1) by means of electrical contacts (4, 46, 70) and on the other side to the electrically conductive rails (18) by means of further electrical contacts (22, 47, 72).

2. Sensor unit according to Claim 1, **characterized in that** each field (9, 10, 11) has a receiving point (14, 15, 16) for a functional connection element (45, 69).

3. Sensor unit according to Claim 2, **characterized in that** latching tabs (17), which are integrally formed on the edges of the receiving point (14, 15, 16), engage with grooves (48) of the functional connection element (45, 69).

4. Sensor unit according to Claim 3, **characterized in that** an aperture provided within the receiving point (14, 15, 16) permits pin contacts (46, 70) of the functional connection element (45, 69) to feed through into a female connector strip (4) of the base device (1).

5. Sensor unit according to one of the preceding claims, **characterized by** a rigid functional connection element (45) with spatially fixed association of the electrical contacts (46, 47) with respect to one another.

6. Sensor unit according to one of Claims 1-4, **characterized by** a spatially flexible association of the electrical contacts (70, 72) with respect to one another by virtue of the electrical contacts (70) serving to make contact with the base device (1) and the further electrical contacts (72) serving to make contact with the electrically conductive rails (1) being connected to one another in a flexible manner in the functional connection element (69) by means of connecting lines (74).

7. Sensor unit according to one of the preceding claims, **characterized in that** a carrier frame (24, 25, 26) of an operator control or functional element (52) is incorporated in each field (9, 10, 11) of the main support (8) .

8. Sensor unit according to Claim 7, **characterized in that** guide ribs (27), which are integrally formed on the carrier frame (24, 25, 26), engage into corresponding guide grooves (13) of the main support (8).

9. Sensor unit according to Claim 7 or 8, **characterized in that** latching tabs (28), which are integrally formed on the carrier frame (24, 25, 26), engage into corresponding latching grooves (12) of the main support (8) .

10. Sensor unit according to one of Claims 6-9, **characterized in that** a printed circuit board (34, 36, 38) of the operator control or functional element (52) is incorporated in a carrier frame (24, 25, 26).

11. Sensor unit according to Claim 10, **characterized in that** each printed circuit board (34, 36, 38) has an aperture (39) for guiding through a functional connection element (45, 69).

12. Sensor unit according to Claim 10 or 11, **characterized in that** locking ribs (29), which are integrally formed on the carrier frame (24, 25, 26), engage into locking grooves (41) provided on the edge of a printed circuit board (34, 36, 38).

13. Sensor unit according to one of Claims 7-12, **characterized in that** spring elements (30), which are integrally formed on the carrier frame (24, 25, 26), slide off onto corresponding surfaces of an operator control or functional element (52).

14. Sensor unit according to one of the preceding claims, **characterized in that** the electrically conductive rails (18) have at least one end-side angled portion (19, 20), which serves for making electrical contact with a functional element that is integrated in an end-side receiving chamber (61).

15. Sensor unit according to Claim 14, **characterized in that** the functional element is mounted on an end-side component carrier (62), which has spring contacts (63), in order to make contact with the end-side angled portion (19, 20) in this way.

16. Sensor unit according to one of the preceding claims, **characterized in that** an end-side receiving chamber (61) is covered toward the outside by means of an end-side terminal covering strip (59) and is isolated from an end-side field of the main support (8) by means of an end-side terminal element (60).

17. Sensor unit according to Claim 16, **characterized in that** guide elements (33), which are integrally formed on the main support (8), serve to mount an end-side terminal covering strip (59).

18. Sensor unit according to Claim 17, **characterized in that** an end-side terminal covering strip (59) has latching hooks (65), which engage into the guide elements (33) in the mounted state.

19. Sensor unit according to one of the preceding claims, **characterized in that** the functional connection element (45, 69) has a coding means, for example in the form of a resistor, in order to provide the base device with information regarding the specific type of sensor unit.

20. Sensor unit according to one of the preceding claims, **characterized in that** the functional connection element (45, 69) has a microprocessor comprising a nonvolatile memory, in order to identify and/or to store the function of a sensor unit in this way.

## Revendications

1. Module de capteurs, doté d'un appareil de base (1) susceptible d'être monté dans une prise encastrée standard, disponible dans le commerce ou d'au moins un élément fonctionnel ou de commande, lequel peut être relié avec au moins un élément fonctionnel ou de commande (52), un support de base (8) étant prévu qui comporte au moins une zone (9, 10, 11) destinée à recevoir un élément fonctionnel ou de commande (52), dans le support de base (8) étant intégrées plusieurs barrettes conductrices d'électricité (18) qui servent en partie à l'alimentation d'énergie électrique et en partie à la communication,
- les barrettes conductrices d'électricité (18) étant connectées par l'intermédiaire de contacts électriques (23, 42) avec l'au moins un élément fonctionnel ou de commande (52), **caractérisé**
- **en ce qu'**un élément d'assemblage fonctionnel (45, 69) est connecté d'une part par l'intermédiaire de contacts électriques (4, 46, 70) avec l'au moins un appareil de base (1) et d'autre part, par des contacts électriques (22, 47, 72) supplémentaires avec les barrettes conductrices d'électricité (18).

2. Module de capteurs selon la revendication 1, **caractérisé en ce que** chaque zone (9, 10, 11) comporte un emplacement de logement (14, 15, 16) pour un élément d'assemblage fonctionnel (45, 69).

3. Module de capteurs selon la revendication 2, **caractérisé en ce que** des taquets d'enclenchement (17) surmoulés sur le côté marginal de l'emplacement de logement (14, 15, 16) s'engagent par-dessus des rainures (48) de l'élément d'assemblage fonctionnel (45, 69).

4. Module de capteurs selon la revendication 3, **caractérisé en ce qu'**un ajour prévu à l'intérieur de l'emplacement de logement (14, 15, 16) permet un passage de broches de contact (46, 70) de l'élément d'assemblage fonctionnel (45, 69) dans une barrette de fiches femelles (4) de l'appareil de base (1).

5. Module de capteurs selon l'une quelconque des revendications précédentes, **caractérisé par** un élément d'assemblage fonctionnel (45) rigide avec une affectation physique fixe des contacts électriques (46, 47) entre eux.

6. Module de capteurs selon l'une quelconque des revendications 1 à 4, **caractérisé par** une affectation physique modulable des contacts électriques (70, 72) entre eux, en ce que dans le cas de l'élément d'assemblage fonctionnel (69), les contacts électriques (70) servant à la mise en contact avec l'appareil de base (1) et les contacts électriques (72) supplémentaires servant à la mise en contact avec les barrettes conductrices d'électricité (1) sont connectés les uns aux autres de manière modulable par l'intermédiaire de câbles de connexion (74).

7. Module de capteurs selon l'une quelconque des revendications précédentes, **caractérisé en ce que** dans chaque zone (9, 10, 11) du support de base (8) est intégré un cadre porteur (24, 25, 26) d'un élément fonctionnel ou de commande (52).

8. Module de capteurs selon la revendication 7, **caractérisé en ce que** des nervures de guidage (27) surmoulées sur le cadre porteur (24, 25, 26) s'engagent dans des rainures de guidage (13) correspondantes du support de base (8).

9. Module de capteurs selon la revendication 7 ou 8, **caractérisé en ce que** des taquets d'enclenchement (28) surmoulés sur le cadre porteur (24, 25, 26) s'engagent dans des rainures d'enclenchement (12) correspondantes du support de base (8).

10. Module de capteurs selon l'une quelconque des revendications 6 à 9, **caractérisé en ce que** dans un cadre porteur (24, 25, 26) est intégrée une carte de circuits imprimés (34, 36, 38) de l'élément fonctionnel ou de commande (52).

11. Module de capteurs selon la revendication 10, **caractérisé en ce que** chaque carte de circuits imprimés (34, 36, 38) comporte un ajour (39) destiné à faire passer un élément d'assemblage fonctionnel (45, 69).

12. Module de capteurs selon la revendication 10 ou 11, **caractérisé en ce que** des nervures de blocage (29) surmoulées sur le cadre porteur (24, 25, 26) s'engagent dans des rainures de blocage (41) prévues sur les côtés marginaux d'une carte de circuits imprimés (34, 36, 38).

13. Module de capteurs selon l'une quelconque des revendications 7 à 12, **caractérisé en ce que** des éléments à ressorts (30) surmoulés sur le cadre porteur (24, 25, 26) glissent sur des surfaces correspondantes de l'élément fonctionnel ou de commande (52).

14. Module de capteurs selon l'une quelconque des revendications précédentes, **caractérisé en ce que** les barrettes conductrices d'électricité (18) comportent au moins un coudage (19, 20) d'extrémité, lequel sert à la mise en contact électrique d'un élément fonctionnel intégré dans un compartiment de logement (61) d'extrémité.

15. Module de capteurs selon la revendication 14, **caractérisé en ce que** l'élément fonctionnel est monté sur un support de composants (62) d'extrémité, lequel comporte des ressorts de contact (63) pour entrer en contact de cette sorte avec le coudage (19, 20) d'extrémité.

16. Module de capteurs selon l'une quelconque des revendications précédentes, **caractérisé en ce qu'**un compartiment de logement (61) d'extrémité est recouvert vers l'extérieur au moyen d'une baguette de finition (59) d'extrémité et, au moyen d'un élément de finition (60) d'extrémité, est séparé d'une zone d'extrémité du support de base (8) .

17. Module de capteurs selon la revendication 16, **caractérisé en ce que** des éléments de guidage (33) surmoulés sur le support de base (8) servent au montage d'une baguette de finition (59) d'extrémité.

18. Module de capteurs selon la revendication 17, **caractérisé en ce qu'**une baguette de finition (59) d'extrémité comporte des crochets d'enclenchement (65), qui dans la position montée s'engagent dans les éléments de guidage (33).

19. Module de capteurs selon l'une quelconque des revendications précédentes, **caractérisé en ce que** l'élément d'assemblage fonctionnel (45, 69) comporte un moyen de codage, par ex. sous la forme d'une résistance, pour mettre à la disposition de l'appareil de base des informations concernant le type spécial du module de capteurs.

20. Module de capteurs selon l'une quelconque des revendications précédentes, **caractérisé en ce que** l'élément d'assemblage fonctionnel (45, 69) comporte un micro-processeur à mémoire non volatile pour déterminer et/ou pour mémoriser de la sorte la fonction d'un module de capteurs.
